# EUROPÄISCHE PATENTSCHRIFT

(11) **EP 4 392 736 B1**
(45) Veröffentlichungstag und Bekanntmachung des Hinweises auf die Patenterteilung: **10.12.2025**
(21) Anmeldenummer: 23805460.5
(22) Anmeldetag: 04.10.2023
(51) Int. Cl.: G01B 7/14

(54) **SENSOR FÜR DIE ABSTANDS- ODER POSITIONSMESSUNG**
SENSOR FOR MEASURING A DISTANCE OR A POSITION
CAPTEUR DE MESURE DE DISTANCE OU DE POSITION

(30) Priorität: 09.11.2022 DE 102022211847
(43) Veröffentlichungstag der Anmeldung: 03.07.2024
(73) Patentinhaber: MICRO-EPSILON-MESSTECHNIK GMBH & CO. K.G., 94496 Ortenburg (DE)
(72) Erfinder: BILLER, Benedikt, 94469 Deggendorf (DE); KASBERGER, Julian, 94099 Ruhstorf an der Rott (DE); REINDL, Norbert, 94081 Fürstenzell (DE); WISSPEINTNER, Thomas, 94496 Ortenburg (DE)
(74) Vertreter: Ullrich & Naumann PartG mbB
(86) Internationale Anmeldenummer: PCT/DE2023/200207
(87) Internationale Veröffentlichungsnummer: WO 2024/099522

(56) Entgegenhaltungen:
- DE-A1- 10 205 985
- DE-A1- 2 407 065
- DE-U1- 202015 102 626
- JP-A- 2019 035 707
- US-A1- 2003 006 756

## Beschreibung

Die Erfindung betrifft einen Sensor für die Abstands- oder Positionsmessung, insbesondere kapazitiv oder induktiv oder auf Basis eines Wirbelstroms arbeitender Sensor, mit einem einen flächigen Bereich aufweisenden Träger und einem auf dem flächigen Bereich angeordneten oder in den flächigen Bereich integrierten Sensorelement.

Für die Messung von beispielsweise Walzenspalten können sehr gut hochauflösende kapazitive Sensoren eingesetzt werden. Dazu werden flache, ein- oder zweiseitig messende Sensoren verwendet, die beispielsweise Spalte ab 0,5mm zwischen zwei Walzen messen können. Dabei ist die Messung nicht auf Walzen limitiert, sondern kann sowohl bei flachen als auch gewölbten Oberflächen eingesetzt werden.

JP 2019-035707 A offenbart einen Spaltsensor mit einem flächigen Träger und zwei in entgegengesetzten Richtungen messenden Elektrodenpaaren.

Je nach Einsatzort kann es bei diesen Messungen zu starker Partikelbelastung kommen, ganz besonders wenn die Sensoren waagrecht montiert sind und Partikel oder Staub einfach auf der Sensorfläche liegen bleiben oder bleibt.

Zu viele Partikel auf den Sensoren können die Abstandsmessung beeinträchtigen.

Ein kapazitiver Sensor reagiert nicht nur auf den eigentlich zu messenden Abstand, sondern auch auf das Medium im Spalt. Das bedeutet, ein elektrisch nicht leitfähiges Medium im Spalt erhöht die Kapazität, was in der Auswertung des Sensorsignals einer Abstandsverringerung gleich kommt. Eine zunehmende Ablagerung aus Partikeln lässt sich damit nicht von einer langsamen Abstandsänderung unterscheiden.

Speziell bei leitfähigen Stäuben wie z.B. Graphit oder Kohlefasern kann es neben der Veränderung der Dielektrizität aber auch zu Kurzschlüssen und kompletten Ausfällen der kapazitiven Spaltmessung kommen.

Nach aktuellem Stand der Technik wird bei Spaltsensoren in einzelnen Fällen eine separate Luftaustrittsdüse in der Nähe des Sensors montiert, die aber eine turbulente Strömung im Bereich des Sensors erzeugt. Eine derart erzeugte turbulente Strömung mit entsprechenden Luftverwirbelungen kann dazu führen, dass sich dünne und/oder flexible Sensoren verbiegen oder auch zum Schwingen angeregt werden. Das führt zu nicht verwertbaren Messungen.

Sofern möglich, können in staubigen Umgebungen auch diverse Schutzbleche oder ähnliche mechanische Vorkehrungen montiert werden, die einen mechanischen Schutz gegen Verschmutzung oder zumindest eine Reduzierung von Verschmutzung bieten, allerdings auch erhöhte Anforderungen an einen erforderlichen Bauraum haben.

Soweit es die jeweiligen Einbausituationen zulassen, werden für solche Applikationen auch optische Sensoren verwendet, die in Schutzgehäusen eingebaut werden. Diese Schutzgehäuse weisen teilweise auch Luftanschlüsse auf, um beispielsweise ein Sichtfenster für ein Sensorelement freizuhalten. Diese Schutzgehäuse schränken die Einbaumöglichkeiten aufgrund ihrer jeweiligen Ausdehnung allerdings deutlich ein.

Der vorliegenden Erfindung liegt daher die Aufgabe zugrunde, einen Sensor der eingangs genannten Art anzugeben, der ein sicheres Messverhalten bei unterschiedlichsten Umgebungsbedingungen mit konstruktiv einfachen Mitteln ermöglicht.

Erfindungsgemäß wird die voranstehende Aufgabe durch einen Sensor mit den Merkmalen des Anspruchs 1 gelöst. Danach ist der Sensor derart ausgestaltet und weitergebildet, dass dem Träger, dem flächigen Bereich oder dem Sensorelement eine Einrichtung zur Strömung eines gasförmigen Mediums entlang des flächigen Bereichs oder Sensorelements zugeordnet ist.

**In** erfindungsgemäßer Weise ist zunächst erkannt worden, dass durch geschickte Realisierung einer Einrichtung zur Beseitigung oder Reduzierung von sich auf dem flächigen Bereich oder dem Sensorelement ablagernden Verschmutzungen oder Partikeln die voranstehende Aufgabe auf überraschend einfache Weise gelöst wird. **In** weiter erfindungsgemäßer Weise ist dann erkannt worden, dass die Einrichtung konkret derart dem Träger, dem flächigen Bereich oder dem Sensorelement zuzuordnen ist, dass eine Strömung eines gasförmigen Mediums entlang des flächigen Bereichs oder Sensorelements bereitgestellt ist. Eine derartige Strömung entlang des flächigen Bereichs oder Sensorelements gewährleistet einerseits eine effektive Beseitigung oder Reduzierung von sich auf dem flächigen Bereich oder dem Sensorelement ablagernden Verschmutzungen oder Partikeln und andererseits eine möglichst geringe mechanische Belastung des Sensorelements durch Verbiegungen des Sensorelements aufgrund von turbulenten Luftverwirbelungen. Der flächige Bereich oder das Sensorelement können somit sehr schonend mittels des gasförmigen Mediums von Verschmutzungen oder Partikeln befreit werden. Eine Beeinträchtigung des Messverhaltens des Sensors aufgrund von Verbiegungen des Sensorelements können hierbei weitestgehend vermieden werden und der Sensor liefert auch in Umgebungen mit Verschmutzungs- und Partikelanfall zuverlässige Messergebnisse.

Folglich ist mit dem erfindungsgemäßen Sensor ein Sensor bereitgestellt, der ein sicheres Messverhalten bei unterschiedlichsten Umgebungsbedingungen mit konstruktiv einfachen Mitteln ermöglicht.

Im Hinblick auf eine besonders schonende Beseitigung von Verschmutzungen oder Partikeln auf dem flächigen Bereich oder Sensorelement kann die Einrichtung zur Erzeugung einer laminaren Strömung des Mediums entlang des flächigen Bereichs oder Sensorelements ausgebildet sein. Eine derartige laminare Strömung zeichnet sich durch ihre gleichbleibende Strömungsgeschwindigkeit aus, die keine ruckartigen Impulse auf ein Sensorelement oder einen flächigen Bereich ausübt, wie dies beispielsweise bei turbulenten Luftverwirbelungen der Fall sein kann. Des Weiteren verhindert eine laminare Strömung von vornherein ein Anhaften von Verschmutzungen und Partikeln auf dem flächigen Bereich oder Sensorelement. Verschmutzungen und Partikel umfassen unter anderem Staub und Flüssigkeiten wie beispielsweise Wasser und Öle. In jedem Fall ist eine ruhige Strömung von Vorteil, um keine Querkräfte oder Biegemomente auf den flächigen Bereich oder das Sensorelement zu erzeugen, die wiederum zu Vibrationen eines dünnen Trägers oder Sensorelements führen können. Weiterhin lässt sich durch eine laminare Strömung die Flugrichtung von Verschmutzungen und Partikeln gut kontrollieren.

Zur Gewährleistung einer besonders effektiven Beseitigung von Partikeln oder sonstigen Verschmutzungen kann die Einrichtung einen Einstellmechanismus oder Regelmechanismus zur Einstellung oder Regelung der Strömung und/oder einer Strömungsgeschwindigkeit des Mediums aufweisen. Dabei kann eine konstante Strömung mit konstanter Strömungsgeschwindigkeit eingestellt werden und/oder beispielsweise unter Einsatz geeigneter Messsensoren geregelt werden. Des Weiteren kann bei bereits vorliegender Verschmutzung mittels der Einstelleinrichtung ein Druckstoß oder eine gepulste Strömung erzeugt werden, um eine Verschmutzung zu entfernen, die beispielsweise durch Ausfall der Zuführung des Mediums oder einer Druckluft, was zu Ablagerungen führen kann, die je nach Material mehr oder weniger stark auf einem flächigen Bereich oder einem Sensorelement anhaften bleiben können, bei plötzlichem hohem Anfall von Verschmutzung oder bei längerem Stillstand entstehen kann. Dabei kann zunächst mit höherem Druck oder höherer Reynolds-Zahl geströmt werden und anschließend ein Druck reduziert werden, vorzugsweise bis zu einer gewünschten Strömung oder Strömungsgeschwindigkeit.

Bei einem konkreten Ausführungsbeispiel kann die Strömung des Mediums quer zu einer Messrichtung geführt sein. Dies gewährleistet, dass Verschmutzungen oder Partikel gezielt aus einer durch die Messrichtung vorgegebenen Messlinie heraus bewegt werden. Alternativ oder zusätzlich hierzu kann die Strömung des Mediums parallel zu dem flächigen Bereich oder Sensorelement geführt sein. Dies gewährleistet eine sichere Führung von Verschmutzungen oder Partikeln weg von dem flächigen Bereich oder Sensorelement, ohne dass beispielsweise Biegemomente auf den flächigen Bereich oder das Sensorelement ausgeübt werden, die eine Messung verfälschen oder unmöglich machen würden.

Hinsichtlich eines besonders sicheren Betriebs des Sensors kann die Einrichtung ein dem Träger, dem flächigen Bereich oder dem Sensorelement zugeordnetes und/oder an den Träger, an den flächigen Bereich oder an das Sensorelement ankoppelbares und von dem Träger, dem flächigen Bereich oder dem Sensorelement abkoppelbares Führungselement für die Strömung des Mediums aufweisen. Mit einem derartigen Führungselement ist eine besonders sichere Führung einer Strömung des gasförmigen Mediums ermöglicht. Je nach Ausgestaltung des Führungselements kann das Medium mittels des Führungselements in unterschiedliche gewünschte Richtungen zur Beseitigung von Verschmutzungen oder Partikeln auf dem flächigen Bereich oder Sensorelement geleitet werden. Durch die Möglichkeit des Ankoppelns und Abkoppelns kann ein Betrieb des Sensors je nach Erfordernis auch ohne ein derartiges Führungselement erfolgen. Hierdurch ergibt sich eine hohe Flexibilität bezüglich des Einsatzes eines Sensors, einmal mit und einmal ohne Führungselement. Auch eine Nachrüstung eines Sensors mit einem Führungselement ist hierdurch ermöglicht.

Im Hinblick auf eine besonders sichere Erzeugung der Strömung und damit auf einen sicheren Betrieb des Sensors kann das Führungselement einen Anschluss für eine Zuführleitung für das Medium aufweisen. Dabei wird das Medium auf einfache und sicher steuerbare Weise über oder durch das Führungselement zu dem flächigen Bereich oder Sensorelement geführt.

Weiterhin hinsichtlich einer besonders sicher kontrollierten Erzeugung der Strömung kann das Führungselement eine mit dem Anschluss strömungsverbundene Aufnahme- oder Verteilkammer für das Medium aufweisen. Eine derartige Aufnahme- oder Verteilkammer kann als Pufferkammer für das Medium dienen und aufgenommenes Medium kontrolliert zum flächigen Bereich oder Sensorelement leiten.

Zur sicheren Leitung der Strömung zum flächigen Bereich oder Sensorelement kann die Aufnahme- oder Verteilkammer mindestens einen Auslass für das Medium aufweisen. Bei Realisierung eines Auslasses kann das gesamte in der Aufnahme- oder Verteilkammer aufgenommene Medium gezielt entlang des flächigen Bereichs oder Sensorelements geleitet werden. Bei Realisierung zweier oder mehrerer Auslässe können mehrere flächige Bereiche oder Sensorelemente des Sensors mit dem Medium versorgt werden, um eine Strömung des in der Aufnahme- oder Verteilkammer aufgenommenen Mediums entlang mehrerer flächiger Bereiche oder Sensorelemente zu ermöglichen. Im Falle eines Spaltsensors mit zwei in entgegengesetzte Richtungen messenden Sensorelementen kann das Medium gleichzeitig entlang beider Sensorelemente oder entlang den beiden zugehörigen flächigen Bereichen geleitet werden, um die Beseitigung von Verschmutzungen oder Partikeln sicherzustellen. Durch die hierdurch erzeugten parallelen Strömungen werden die Sensorelemente durch die beiden Strömungen quasi sandwichartig eingefasst, wodurch die Erzeugung von für eine Messung schädlichen Biegemomenten auf die Sensorelemente besonders sicher vermieden ist.

Je nach Erfordernis und Ausgestaltung des flächigen Bereichs oder Sensorelements kann der mindestens eine Auslass einen Schlitz, einen Schlitz mit mindestens einem Führungssteg oder mehrere nebeneinander angeordnete Durchgänge aufweisen. Bei der Realisierung eines Schlitzes - mit oder ohne Führungssteg - kann eine breite, dünne und flache Strömung realisiert werden. Auch durch mehrere nebeneinander angeordnete Durchgänge ist eine flache Strömung sicher realisierbar.

Das Führungselemente kann entweder einteilig oder mehrteilig ausgebildet sein. Bei einer mehrteiligen Ausbildung kann das Führungselemente auf individuelle Art und Weise an unterschiedliche Messbedingungen beispielsweise räumlicher Art angepasst werden. Auch ermöglicht die mehrteilige Ausbildung den einfachen Austausch beschädigter Teile unter Weiterverwendung nicht beschädigter Teile.

Bei einem weiteren Ausführungsbeispiel kann das Führungselement zwei koppelbare oder verschraubbare Halbschalen aufweisen oder aus zwei koppelbaren oder verschraubbaren Halbschalen aufgebaut sein. Derartige Halbschalen können beispielsweise von unterschiedlichen Seiten aus und auf sehr einfache Weise einem Träger oder Sensor zugeordnet werden.

Dabei kann der Träger auf sichere Weise zumindest bereichsweise zwischen den Halbschalen angeordnet und/oder die Halbschalen durch Klemmwirkung am Träger fixiert sein, wodurch sich eine besonders geschützte Anordnung des Trägers mittels der Halbschalen und besonders sichere und stabile Kopplung von Träger und Halbschalen oder Führungselement ergibt.

Je nach gewünschter Strömungsrichtung können oder kann der Träger und/oder das Führungselement und/oder die Aufnahme- oder Verteilkammer eine gekrümmte oder gewinkelte Form aufweisen. Beispielsweise kann die gekrümmte oder gewinkelte Form eine Krümmung oder Winkeln von etwa 90° aufweisen, um die Strömung entsprechend um etwa 90° aus einer Zuführrichtung umzuleiten.

Bei der Erfindung weist der Träger oder flächige Bereich zwei in entgegengesetzte Richtungen messende Sensorelemente auf, wodurch ein Spaltsensor gebildet ist, mit dem sich Spaltbreiten besonders einfach messen lassen. Ganz allgemein kann der Träger oder flächige Bereich mehrere in unterschiedliche Richtungen messende Sensorelemente aufweist, wobei die Anzahl an Sensorelementen und Richtungen je nach Anwendungsfall auch drei oder mehr sein kann.

Im Hinblick auf eine besonders einfache und sichere Konstruktion kann der Träger als Leiterplatte ausgebildet sein oder eine Leiterplatte aufweisen. Die Verwendung von Leiterplatten als Träger hat sich in der Praxis bewährt und ermöglicht eine flexible und kostengünstige Herstellung eines Sensors.

Im Hinblick auf eine besonders sichere Ansteuerung und/oder Übertragung von Messdaten zu einer Auswerteelektronik kann das Sensorelement über eine koaxiale oder triaxiale Leitung mit einer Auswerteelektronik kontaktiert sein. Mittels einer triaxialen Leitung lässt sich eine besonders hohe Schirmwirkung erzielen. Weitere Vorteile und Aspekte von Ausführungsbeispielen des erfindungsgemäßen Sensors werden im Folgenden erläutert:
Durch ein fest angebautes oder auch nachträglich montierbares Führungselement für das Medium kann eine Strömung oder Luftströmung quer zur Messrichtung integriert werden, die Partikel oder Verschmutzungen wegbläst. Die oben beschriebenen beiden Halbschalen können so gestaltet sein, dass sich eine Luftströmung parallel zur Sensoroberfläche oder dem Sensorelement ausbildet.

Die Strömung kann über die gesamte Sensorfläche oder das gesamte Sensorelement oder die mehreren gesamten Sensorelemente realisiert sein, gegebenenfalls auf beiden Seiten des Trägers.

Durch einen seitlichen Verbindungskanal im Führungselemente kann eine Luftkammer oder Aufnahme- oder Verteilkammer entstehen, die an einem Punkt - einem Anschluss - gespeist wird, die Ausströmung aber an unterschiedlichen Öffnungen oder Auslässen ermöglicht. Dabei ist es unerheblich, aus welcher Richtung die Luft oder das Medium eingespeist wird, dies kann je nach Einbausituation individuell angepasst werden. Beispielsweise kann Druckluft über einen Anschluss eingespeist werden.

Diese Luftführung oder dieses Führungselement kann je nach Anforderungen aus einfachen, 3d-gedruckten Kunststoffteilen bis hin zu komplexeren gefrästen Metallteilen gefertigt werden. Dabei kann die Luftführung oder das Führungselemente und die Luftkammer oder die Aufnahme- oder Verteilkammer als eine Einheit geformt sein.

In jedem Fall kann eine einfache Gestaltung des Luftaustritts oder Auslasses an den jeweils benötigten Stellen realisiert werden. In einem einfachen Fall kann der Luftaustritt oder Auslass eine Schlitzdüse aufweisen. Auch eine Reihe von Lochdüsen oder eine Schlitzdüse mit Stegen oder ohne Stege im Spalt zur Führung des Luftstromes - vorzugsweise laminar - ist realisierbar.

Die Luftaustritte oder Auslässe auf beiden Seiten eines Spaltsensors haben den Vorteil, dass es durch die Luftströmung oder Strömung des Mediums nicht zu einer einseitigen Temperaturänderung kommt und sich ein dünner/flexibler Sensor in eine Richtung verbiegen würde. Der Grund hierfür ist, dass Luft oder ein Medium aus einer gemeinsamen Luftkammer oder Aufnahme- oder Verteilkammer auf beide Seiten geleitet wird. Selbst wenn es durch eine Temperaturdifferenz zwischen Luft oder Medium und Sensor zu einer oft auch gewollten Kühlung des Sensors kommt, so ist der Effekt auf beiden Seiten gleich und der in der Mitte liegende Sensor bleibt gerade.

Insbesondere eine schlanke Gestaltung des Sensors in Verbindung mit dem einzelnen Anschluss oder Luftanschluss ermöglicht einen sehr kompakten Sensor, der auch in beengten Einbausituationen sehr gut zur Anwendung kommen kann.

Dabei kann das Führungselemente über den Sensor geschraubt werden, der weiterhin an seinen dafür vorgesehenen Anschraubpunkten montiert werden kann.

Das Führungselement kann an eine Walzengeometrie angepasst werden und eine zusätzliche mechanische Stabilisierung eines beispielsweise 0,4mm dünnen Sensors gewährleisten. Das reduziert auch die Neigung zum Schwingen oder Vibrieren des Sensors, beispielsweise bedingt durch externe Vibrationen. Dabei kann das Führungselemente eine gekrümmte Oberfläche aufweisen.

Ausführungsbeispiele des erfindungsgemäßen Sensors können nicht nur bei einer Messung eines Walzenspaltes eingesetzt werden, sondern auch allgemein bei Spaltmessungen in rauer Umgebung, wo eine Verschmutzung auftreten kann.

Ganz allgemein kann der Sensor, beispielsweise für eine Walzenspaltmessung, als Flachsensor mit einer Einrichtung zur Strömung eines gasförmigen Mediums entlang des flächigen Bereichs oder Sensorelements des Sensors realisiert werden. Ganz grundsätzlich kann die Einrichtung zur Strömung eines gasförmigen Mediums auch als Freiblaseinrichtung bezeichnet werden, nämlich als Einrichtung, die den flächigen Bereich oder das Sensorelement von Verschmutzungen oder Partikeln freibläst.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Sensors zu verweisen. **In** Verbindung mit der Erläuterung der bevorzugten Ausführungsbeispiele anhand der Zeichnung werden auch im Allgemeinen bevorzugte Ausgestaltungen und Weiterbildungen der Lehre erläutert. **In** der Zeichnung zeigen
- Fig. 1: in einer perspektivischen Darstellung ein erstes Ausführungsbeispiel des erfindungsgemäßen Sensors,
- Fig. 2: in einer Seitenansicht, teilweise geschnitten, das Ausführungsbeispiel aus Fig. 1 bei einer Anwendung zwischen zwei Walzen,
- Fig. 3: in zwei Explosionsdarstellungen das Ausführungsbeispiel aus Fig. 1, einmal schräg von oben und einmal schräg von unten,
- Fig. 4: in einer Seitenansicht, teilweise geschnitten, sowie in einer Draufsicht das Ausführungsbeispiel aus Fig. 1,
- Fig. 5: in einer Explosionsdarstellung, schräg von oben, ein zweites Ausführungsbeispiel des erfindungsgemäßen Sensors und
- Fig. 6: in einer Seitenansicht und in einer Draufsicht das zweite Ausführungsbeispiel aus Fig. 5.

Bei den im Folgenden beschriebenen Ausführungsbeispielen des erfindungsgemäßen und als Spaltsensor 1 ausgebildeten Sensors bedeuten gleiche Bezugsziffern gleiche Bauelemente.

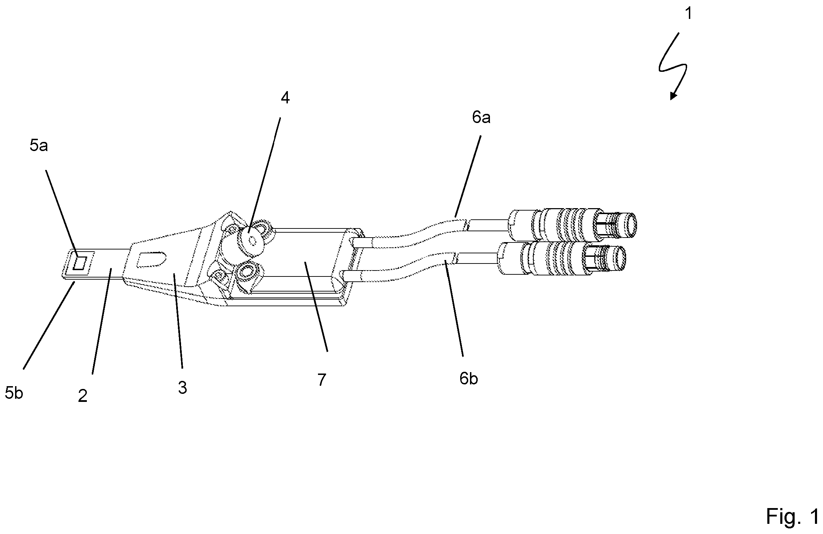

Fig. 1 zeigt in einer perspektivischen Darstellung ein erstes Ausführungsbeispiel des erfindungsgemäßen und als Spaltsensor 1 ausgebildeten Sensors mit einem einen flächigen Bereich 2 aufweisenden Substrat oder Träger und einer Einrichtung 3 zur Strömung eines gasförmigen Mediums entlang des flächigen Bereichs 2, wobei die Einrichtung 3 auch als Freiblaseinrichtung 3 bezeichnet werden kann. Die Freiblaseinrichtung weist einen Anschluss 4 für das gasförmige Medium - hier Luft - auf. Anstelle von Luft können auch andere gasförmige Medien für die Erzeugung der Strömung verwendet werden. Der Anschluss 4 ist bei diesem Ausführungsbeispiel als Druckluftanschluss 4 ausgebildet, an den ein nicht gezeigter Druckschlauch angekoppelt werden kann. Am vorderen Ende des flächigen Bereichs 2 sind Sensorelemente 5a, 5b auf entgegengesetzten Seiten des flächigen Bereichs 2 angeordnet, sodass die Sensorelemente 5a, 5b in entgegengesetzte Richtungen messen, um beispielsweise eine Spaltbreite zu bestimmen. Der Spaltsensor 1 kann über den Anschluss 4 mit Druckluft beaufschlagt werden, sodass durch die Strömung der Luft Verschmutzungen oder Partikel vom flächigen Bereich 2 oder von den Sensorelementen 5a, 5b entfernt werden können.

Weiterhin weist der Spaltsensor 1 zwei elektrische Anschlüsse für die beiden kapazitiven Sensorelemente 5a, 5b in Form von Triaxialleitungen 6a, 6b auf, die in einem Anschlussbereich 7 am Spaltsensor 1 kontaktiert werden.

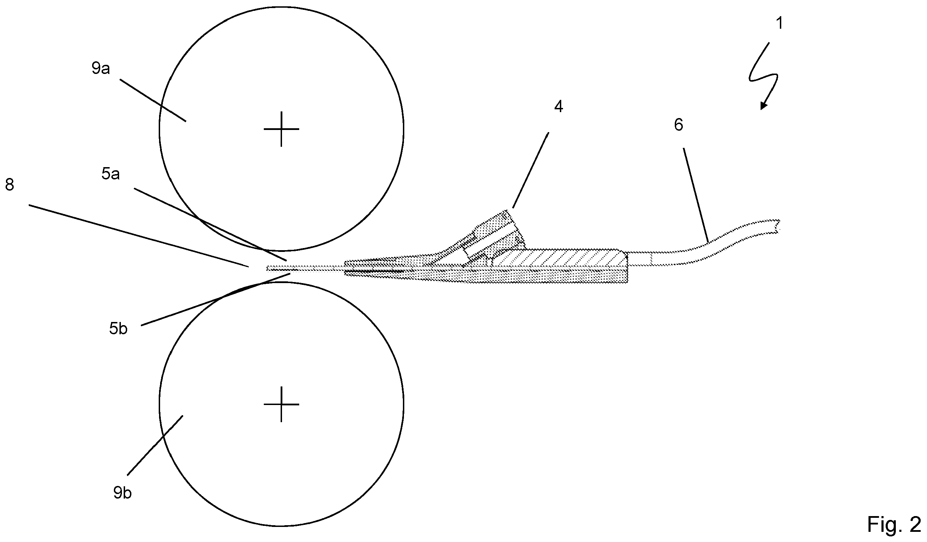

Fig. 2 zeigt den Spaltsensor 1 aus Fig. 1 in einer teilweise geschnittenen Seitenansicht in einer Anordnung zur Messung eine Walzenspalts 8 zwischen zwei Walzen 9a, 9b. Der Spaltsensor 1 ist dabei seitlich an den Walzen 9a, 9b angeordnet in einem Bereich, wo das Walzgut - nicht gezeigt - nicht verläuft. Dabei ragt der flächige Bereich 2 mit den Sensorelementen 5a, 5b in den Walzenspalt 8. Alternativ kann der Spaltsensor 1 auch im Bereich der Walzenstummel - nicht gezeigt - angeordnet werden.

Um eine Kollision des Druckschlauches - nicht gezeigt - mit den Walzen 9a, 9b zu vermeiden, sind der Druckluftanschluss 4 und die Triaxialleitungen 6 an der rückwärtigen Seite des Spaltsensors 1 angeordnet.

Mit Hilfe der Sensorelemente 5a, 5b wird der Walzenspalt 8 gemessen, indem ein erstes Sensorelement 5a gegen die obere Walze 9a und das zweite Sensorelement 5b gegen die untere Walze 9b misst.

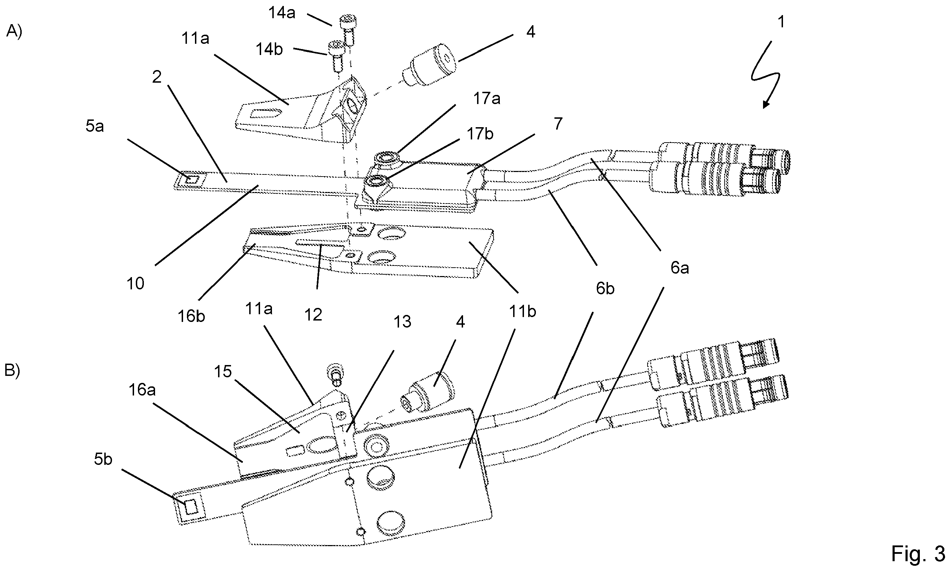

Fig. 3 zeigt den Spaltsensor 1 aus Fig. 1 in zwei Explosionsdarstellungen, einmal schräg von oben (A) und einmal schräg von unten (B). Der Spaltsensor 1 weist zwei Sensorelemente 5a, 5b auf, die auf dem flächigen Bereich 2 eines flachen Trägers oder Substrats 10 angeordnet sind. Im Anschlussbereich 7 werden die Sensorelemente 5a, 5b mit den Triaxialleitungen 6a, 6b kontaktiert. Die Freiblaseinrichtung 3 weist zwei Halbschalen 11a, 11b auf, die gemeinsam ein Führungselement für ein gasförmiges Medium - hier Luft - bilden. Die obere Halbschale 11a enthält den Druckluftanschluss 4 für den Druckluftschlauch - nicht gezeigt - und leitet Druckluft von oben her entlang des Trägers oder Substrats 10 in Richtung des oberen Sensorelements 5a. Die untere Halbschale 11b stützt den Träger oder das Substrat 10 und leitet Druckluft von unten her entlang des Trägers oder Substrats 10 in Richtung des unteren Sensorelements 5b. Zusätzlich enthält die untere Halbschale 11b noch einen Steg 12, der das Substrat 10 zusätzlich unterstützt. Der Steg 12 ist gegenüber einer als Einlass dienenden Lufteintrittsdüse 13 in der oberen Halbschale 11a angeordnet und verhindert, dass das Substrat 10 im vorderen Bereich durch das Auftreffen der Druckluft in Schwingungen gerät. Die beiden Halbschalen 11a, 11b der Freiblaseinrichtung 3 werden durch Schrauben 14a, 14b miteinander verbunden und durch Klemmwirkung am Träger oder Substrat 10 fixiert.

Die beiden Halbschalen 11a, 11b bilden einen mit der Lufteintrittsdüse 13 strömungsverbundenen Hohlraum 15 mit einer in Richtung Sensorelement 5a, 5b offenen Seite, wodurch jeweils eine als Auslass dienende Luftaustrittsdüse 16a, 16b gebildet wird. Die Lufteintrittsdüse 13 bildet dabei den Einlass für den Hohlraum 15, der als Aufnahme- oder Verteilkammer für die Luft dient. Über die Luftaustrittsdüsen 16a, 16b wird die Druckluft entlang des Substrats 10 in Richtung der Sensorelemente 5a, 5b geführt, wodurch Verschmutzungen effektiv entfernt werden. Das Substrat 10 enthält im Anschlussbereich 7 zwei Anschraubbuchsen 17a, 17b, womit der Spaltsensor 1 an einem hier nicht gezeigten Objekt befestigt werden kann. Alternativ kann die Befestigung auch über die Freiblaseinrichtung 3 erfolgen, indem dort z.B. Anschraubösen oder -buchsen ausgeführt sind.

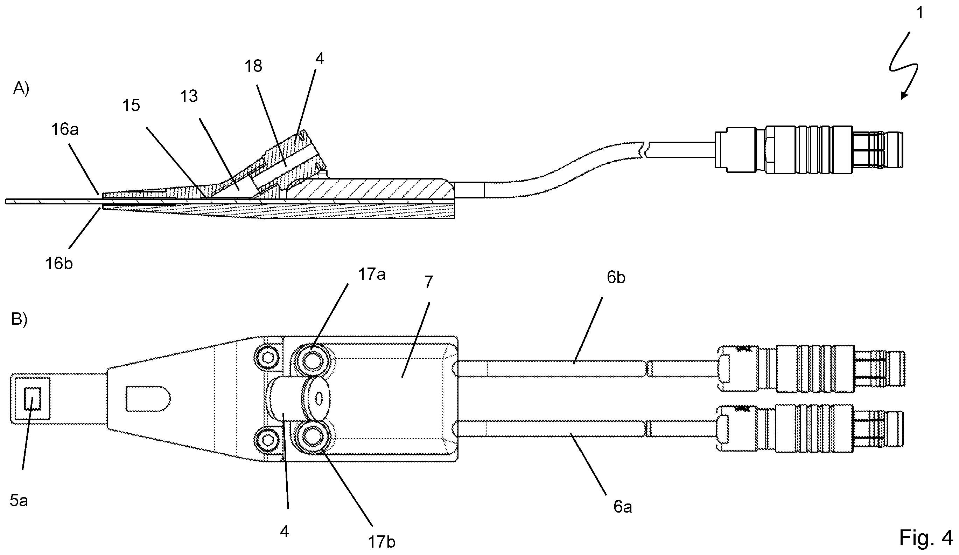

Fig. 4 zeigt den Spaltsensor 1 gemäß dem ersten Ausführungsbeispiel aus Fig. 1 in einer teilweise geschnittenen Seitenansicht (A) sowie in einer Draufsicht (B). Über einen Luftkanal 18 im vorzugsweise an- und abkoppelbaren Druckluftanschluss 4 wird Druckluft über die Lufteintrittsdüse 13 in den Hohlraum 15 geführt und dann zu den Luftaustrittsdüsen 16a, 16b weitergeleitet.

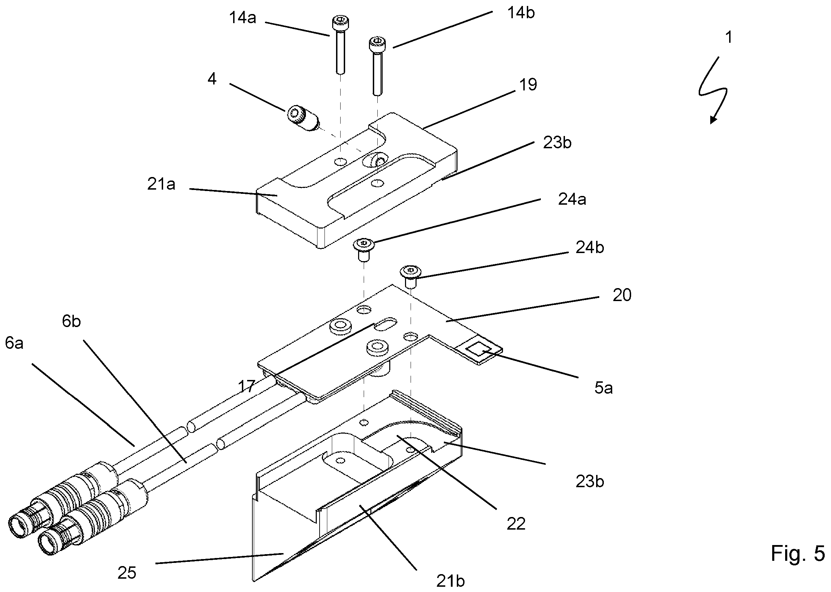

Fig. 5 zeigt in einer Explosionsdarstellung, schräg von oben, ein zweites Ausführungsbeispiel eines erfindungsgemäßen Sensors in Form eines Spaltsensors 1 mit einer Freiblaseinrichtung 19 in gewinkelter Ausführung. Dabei ist der Träger oder das Substrat 20 gewinkelt geformt, idealerweise mit einem Winkel von 90°. Damit kann der Spaltsensor 1 so angeordnet werden, dass die Sensorelemente 5a, 5b in einen hier nicht gezeigten Walzenspalt hineinragen und die Anschlüsse - elektrische Leitungen 6a, 6b, Druckluftanschluss 4 - seitlich herausgeführt werden. Dadurch wird eine Störung des Walzvorganges vermieden. In diesem Beispiel sind die Halbschalen 21a, 21b so ausgeführt, dass der Hohlraum 22 ebenfalls gewinkelt ist und die Luftaustrittsdüsen 23a, 23b die Druckluft wiederum in Richtung der Sensorelemente 5a, 5b führen. Die Halbschalen 21a, 21b werden mit Schrauben 14a, 14b miteinander verbunden. Zusätzlich wir das Substrat 20 noch mit Einpressbuchsen 24a, 24b mit der unteren Halbschale 21b verbunden, um es mechanisch zu fixieren. **In** dem Beispiel ist die untere Halbschale 21b gleichzeitig für die Befestigung des Sensors 1 ausgeführt. Dazu ist an der Halbschale 21b ein Metallwinkel 25 ausgeformt, mit dem der Sensor 1 seitlich, z.B. an einem hier nicht gezeigten Walzgerüst, befestigt werden kann.

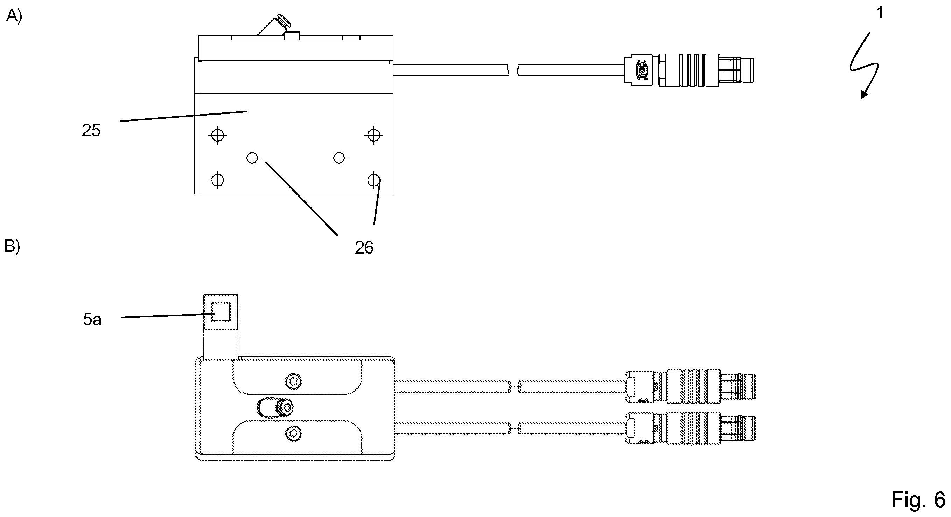

Fig. 6 zeigt den Spaltsensor 1 gemäß dem zweiten Ausführungsbeispiel aus Fig. 5 in einer Seitenansicht (A) und in einer Draufsicht (B). Am Metallwinkel 25 sind Durchgänge oder Bohrungen 26 zur Befestigung an einem hier nicht gezeigten Objekt angebracht.

Hinsichtlich weiterer vorteilhafter Ausgestaltungen des erfindungsgemäßen Sensors wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Spaltsensor
- 2: flächiger Bereich
- 3: Einrichtung, Freiblaseinrichtung
- 4: Anschluss, Druckluftanschluss
- 5a, 5b: Sensorelement
- 6, 6a, 6b: Triaxialleitung
- 7: Anschlussbereich
- 8: Walzenspalt
- 9a, 9b: Walze
- 10: Träger, Substrat
- 11a, 11b: Halbschale
- 12: Steg
- 13: Lufteintrittsdüse
- 14a, 14b: Schraube
- 15: Hohlraum
- 16a, 16b: Luftaustrittsdüse
- 17a, 17b: Anschraubbuchse
- 18: Luftkanal
- 19: Einrichtung, Freiblaseinrichtung
- 20: Träger, Substrat
- 21a, 21b: Halbschale
- 22: Hohlraum
- 23a, 23b: Luftaustrittsdüse
- 24a, 24b: Einpressbuchse
- 25: Winkel
- 26: Durchgang

## Patentansprüche

1. Sensor für die Abstands- oder Positionsmessung, der als kapazitiv oder induktiv oder auf Basis eines Wirbelstroms arbeitender Sensor konfiguriert ist, mit einem einen flächigen Bereich (2) aufweisenden Träger (10; 20) und zwei auf dem flächigen Bereich (2) angeordneten oder in den flächigen Bereich (2) integrierten in entgegengesetzte Richtungen messenden Sensorelementen (5a, 5b), wodurch ein Spaltsensor (1) gebildet ist,
**dadurch gekennzeichnet, dass** dem Träger (10; 20), dem flächigen Bereich (2) oder dem Sensorelement (5a, 5b) eine Einrichtung (3) zur Strömung eines gasförmigen Mediums entlang des flächigen Bereichs (2) oder Sensorelements (5a, 5b) zugeordnet ist.

2. Sensor nach Anspruch 1, **dadurch gekennzeichnet, dass** die Einrichtung (3) zur Erzeugung einer laminaren Strömung des Mediums entlang des flächigen Bereichs (2) oder Sensorelements (5a, 5b) ausgebildet ist.

3. Sensor nach Anspruch 1 oder 2, **dadurch gekennzeichnet, dass** die Einrichtung (3) einen Einstellmechanismus oder Regelmechanismus zur Einstellung oder Regelung der Strömung und/oder einer Strömungsgeschwindigkeit des Mediums aufweist.

4. Sensor nach einem der Ansprüche 1 bis 3, **dadurch gekennzeichnet, dass** die Strömung des Mediums quer zu einer Messrichtung und/oder parallel zu dem flächigen Bereich (2) oder Sensorelement (5a, 5b) geführt ist.

5. Sensor nach einem der Ansprüche 1 bis 4, **dadurch gekennzeichnet, dass** die Einrichtung (3) ein dem Träger (10; 20), dem flächigen Bereich (2) oder dem Sensorelement (5a, 5b) zugeordnetes und/oder an den Träger (10; 20), an den flächigen Bereich (2) oder an das Sensorelement (5a, 5b) ankoppelbares und von dem Träger (10; 20), dem flächigen Bereich oder dem Sensorelement (5a, 5b) abkoppelbares Führungselement für die Strömung des Mediums aufweist.

6. Sensor nach Anspruch 5, **dadurch gekennzeichnet, dass** das Führungselement einen Anschluss (4) für eine Zuführleitung für das Medium aufweist.

7. Sensor nach Anspruch 5 oder 6, **dadurch gekennzeichnet, dass** das Führungselement eine mit dem Anschluss (4) strömungsverbundene Aufnahme- oder Verteilkammer (15; 22) für das Medium aufweist.

8. Sensor nach Anspruch 7, **dadurch gekennzeichnet, dass** die Aufnahme- oder Verteilkammer (15; 22) mindestens einen Auslass (16a, 16b; 23a, 23b) für das Medium aufweist.

9. Sensor nach Anspruch 8, **dadurch gekennzeichnet, dass** der mindestens eine Auslass (16a, 16b; 23a, 23b) einen Schlitz, einen Schlitz mit mindestens einem Führungssteg (12) oder mehrere nebeneinander angeordnete Durchgänge aufweist.

10. Sensor nach einem der Ansprüche 5 bis 9, **dadurch gekennzeichnet, dass** das Führungselement mehrteilig ausgebildet ist.

11. Sensor nach einem der Ansprüche 5 bis 10, **dadurch gekennzeichnet, dass** das Führungselement zwei koppelbare oder verschraubbare Halbschalen (11a, 11b; 21a, 21b) aufweist oder aus zwei koppelbaren oder verschraubbaren Halbschalen (11a, 11b; 21a, 21b) aufgebaut ist.

12. Sensor nach Anspruch 11, **dadurch gekennzeichnet, dass** der Träger (10; 20) zumindest bereichsweise zwischen den Halbschalen (11a, 11b; 21a, 21b) angeordnet ist und/oder die Halbschalen (11a, 11b; 21a, 21b) durch Klemmwirkung am Träger (10; 20) fixiert sind.

13. Sensor nach einem der Ansprüche 1 bis 12, **dadurch gekennzeichnet, dass** der Träger (20) und/oder das Führungselement und/oder die Aufnahme- oder Verteilkammer (22) eine gekrümmte oder gewinkelte Form aufweisen oder aufweist.

## Claims

1. Sensor for distance or position measurement which is configured as a sensor which functions in a capacitive or inductive manner or on the basis of an eddy current, having a carrier (10; 20) which has a planar region (2) and two sensor elements (5a, 5b) which are arranged on the planar region (2) or which are integrated in the planar region (2) and which measure in opposing directions, whereby a gap sensor (1) is formed,
**characterised in that** a device (3) for flowing a gaseous medium along the planar region (2) or sensor element (5a, 5b) is associated with the carrier (10; 20), the planar region (2) or the sensor element (5a, 5b).

2. Sensor according to claim 1, **characterised in that** the device (3) is constructed to produce a laminar flow of the medium along the planar region (2) or sensor element (5a, 5b).

3. Sensor according to claim 1 or 2, **characterised in that** the device (3) has an adjustment mechanism or control mechanism for adjusting or controlling the flow and/or a flow speed of the medium.

4. Sensor according to any one of claims 1 to 3, **characterised in that** the flow of the medium is guided transversely relative to a measurement direction and/or parallel with the planar region (2) or sensor element (5a, 5b).

5. Sensor according to any one of claims 1 to 4, **characterised in that** the device (3) has for the flow of the medium a guiding element which is associated with the carrier (10; 20), the planar region (2) or the sensor element (5a, 5b) and/or which can be coupled to the carrier (10; 20), to the planar region (2) or to the sensor element (5a, 5b) and uncoupled from the carrier (10; 20), the planar region or the sensor element (5a, 5b).

6. Sensor according to claim 5, **characterised in that** the guiding element has a connection (4) for a supply line for the medium.

7. Sensor according to claim 5 or 6, **characterised in that** the guiding element has for the medium a receiving or distribution chamber (15; 22) which is connected to the connection (4) in terms of flow.

8. Sensor according to claim 7, **characterised in that** the receiving or distribution chamber (15; 22) has at least one outlet (16a, 16b; 23a, 23b) for the medium.

9. Sensor according to claim 8, **characterised in that** the at least one outlet (16a, 16b; 23a, 23b) has a slot, a slot having at least one guiding web (12) or a plurality of passages which are arranged beside each other.

10. Sensor according to any one of claims 5 to 9, **characterised in that** the guiding element is constructed in several pieces.

11. Sensor according to any one of claims 5 to 10, **characterised in that** the guiding element has two half-shells (11a, 11b; 21a, 21b) which can be coupled or screwed or is constructed from two half-shells (11a, 11b; 21a, 21b) which can be coupled or screwed.

12. Sensor according to claim 11, **characterised in that** the carrier (10; 20) is arranged at least in areas between the half-shells (11a, 11b; 21a, 21b) and/or the half-shells (11a, 11b; 21a, 21b) are fixed to the carrier (10; 20) by means of a clamping action.

13. Sensor according to any one of claims 1 to 12, **characterised in that** the carrier (20) and/or the guiding element and/or the receiving chamber or distribution chamber (22) have or has a curved or angled shape.

## Revendications

1. Un capteur pour la mesure de distance ou de position, qui est conçu comme un capteur fonctionnant de manière capacitive, inductive ou sur la base de courants de Foucault, avec un support (10 ; 20) présentant une zone plane (2) et deux éléments de capteur (5a, 5b) disposés sur ou intégrés dans la zone plane (2) mesurant dans des directions opposées, formant ainsi un capteur d'écartement (1),
**caractérisé en ce qu'**une installation (3) pour l'écoulement d'un milieu gazeux le long de la zone plane (2) ou de l'élément de capteur (5a, 5b) est associée au support (10 ; 20), à la zone plane (2) ou à l'élément de capteur (5a, 5b).

2. Capteur selon la revendication 1, **caractérisé en ce que** l'installation (3) est conçue pour générer un écoulement laminaire du milieu le long de la zone plane (2) ou de l'élément de capteur (5a, 5b).

3. Capteur selon la revendication 1 ou 2, **caractérisé en ce que** l'installation (3) présente un mécanisme de réglage ou un mécanisme de régulation pour le réglage ou la régulation de l'écoulement et/ou d'une vitesse d'écoulement du milieu.

4. Capteur selon l'une des revendications 1 à 3, **caractérisé en ce que** l'écoulement du milieu est guidé transversalement à une direction de mesure et/ou parallèlement à la zone plane (2) ou à l'élément de capteur (5a, 5b).

5. Capteur selon l'une des revendications 1 à 4, **caractérisé en ce que** l'installation (3) présente un élément de guidage pour l'écoulement du milieu qui est associé au support (10 ; 20), à la zone plane (2) ou à l'élément de capteur (5a, 5b) et/ou peut être couplé au support (10 ; 20), à la zone plane (2) ou à l'élément de capteur (5a, 5b) et peut être découplé du support (10 ; 20), de la zone plane ou de l'élément de capteur (5a, 5b).

6. Capteur selon la revendication 5, **caractérisé en ce que** l'élément de guidage présente un raccord (4) pour une conduite d'alimentation pour le milieu.

7. Capteur selon la revendication 5 ou 6, **caractérisé en ce que** l'élément de guidage présente une chambre de réception ou de distribution (15 ; 22) pour le milieu, connectée de manière fluidique au raccord (4).

8. Capteur selon la revendication 7, **caractérisé en ce que** la chambre de réception ou de distribution (15 ; 22) présente au moins une sortie (16a, 16b ; 23a, 23b) pour le milieu.

9. Capteur selon la revendication 8, **caractérisé en ce que** la ou les sorties (16a, 16b ; 23a, 23b) présentent une fente, une fente avec au moins une nervure de guidage (12) ou plusieurs passages disposés côte à côte.

10. Capteur selon l'une des revendications 5 à 9, **caractérisé en ce que** l'élément de guidage est conçu en plusieurs parties.

11. Capteur selon l'une des revendications 5 à 10, **caractérisé en ce que** l'élément de guidage présente deux demi-coques (11a, 11b ; 21a, 21b) pouvant être couplées ou vissées ou est construit à partir de deux demi-coques (11a, 11b ; 21a, 21b) pouvant être couplées ou vissées.

12. Capteur selon la revendication 11, **caractérisé en ce que** le support (10 ; 20) est disposé au moins partiellement entre les demi-coques (11a, 11b ; 21a, 21b) et/ou les demi-coques (11a, 11b ; 21a, 21b) sont fixées au support (10 ; 20) par effet de serrage.

13. Capteur selon l'une des revendications 1 à 12, **caractérisé en ce que** le support (20) et/ou l'élément de guidage et/ou la chambre de réception ou de distribution (22) présentent ou présente une forme courbée ou angulaire.
